# EUROPÄISCHE PATENTSCHRIFT

(11) **EP 0 597 406 B1**
(45) Veröffentlichungstag und Bekanntmachung des Hinweises auf die Patenterteilung: **10.09.1997**
(21) Anmeldenummer: 93118018.6
(22) Anmeldetag: 06.11.1993
(51) Int. Cl.: B60S 9/08

(54) **Höhenverstellbare Hubstütze, vorzugsweise für Wohnmobile**
Support adjustable in height, preferably for mobile homes
Support réglable en hauteur, préférablement pour caravanes

(30) Priorität: 11.11.1992 DE 4237979
(43) Veröffentlichungstag der Anmeldung: 18.05.1994
(73) Patentinhaber: ROBERT KRAUSE GmbH & CO. KG, 73235 Weilheim (DE)
(72) Erfinder: Kneile, Karl, D-73271 Holzmaden (DE)
(74) Vertreter: Jackisch-Kohl, Anna-Katharina

(56) Entgegenhaltungen:
- WO-A-91/04177
- US-A- 4 129 322
- US-A- 4 162 798
- US-A- 4 635 904

## Beschreibung

Die Erfindung betrifft eine höhenverstellbare Hubstütze, vorzugsweise für Wohnmobile, nach dem Oberbegriff des Anspruches 1.

Bei bekannten Hubstützen ist der Träger an einer Traverse eines Fahrzeuges befestigt. Am Träger ist die Stütze schwenkbar gelagert, auf der ein Stützfuß verschiebbar angeordnet ist. In der Stützlage liegt der Stützfuß mit einer Fußplatte auf dem jeweiligen Untergrund auf. Am Stützfuß ist ein Spannelement drehbar gelagert, das mit einem Schraubenschlüssel oder einer Ratsche gedreht werden kann. Durch Drehen des Spannelementes wird auf die Stütze eine aufwärts gerichtete Kraft ausgeübt, wodurch die Stütze gegenüber dem Stützfuß in der Höhe verstellt und verkeilt wird. Eine solche Hubstütze ist konstruktiv aufwendig ausgebildet und entsprechend teuer in der Herstellung.

Bei der gattungsgemäßen Hubstütze (WO-A-91/04177) sind zwei Mitnehmer vorgesehen, die diametral einander gegenüberliegend mit einem Ende an der Stütze und mit ihrem anderen Ende am Träger schwenkbar gelagert sind. Auf dem Außenrohr der Stütze sitzt ein Hülsenteil, das unter der Kraft einer das Außenrohr umgebenden Druckfeder steht. Auf dem Hülsenteil sitzt ein flexibles Dichtteil, das mit einem Ende am Hülsenteil und mit dem anderen Ende an einem Fußteil des inneren Rohres der Stütze befestigt ist. Dadurch besteht die Stütze aus einer großen Zahl von Bauteilen, wodurch die Hubstütze teuer in der Fertigung ist. Beim Verschwenken der Stütze aus der vertikalen Stützlage in eine Ruhelage wird das Innenrohr in das Außenrohr zurückgeschoben. Dabei wird das Dichtteil und damit das Hülsenteil gegen Federkraft auf dem Außenrohr der Stütze aufwärts verschoben. Dadurch tritt nicht nur eine Relativverschiebung zwischen Innen- und Außenrohr, sondern auch zwischen Dichtteil bzw. Hülsenteil und Außenrohr auf. Darum sind nicht unerhebliche Reibungskräfte zu überwinden, die den Verstellvorgang der Stütze beeinträchtigen.

Bei einer anderen bekannten Hubstütze (US-A-4 129 322) sind zwei Stützen vorgesehen, die jeweils durch Teleskoprohre gebildet sind. Das Innenrohr kann in Höhenrichtung relativ zum Außenrohr verschoben werden. Ein Abklappen bzw. Verschwenken der Stütze aus der vertikalen Stützlage in eine Ruhelage ist nicht vorgesehen.

Es ist auch eine Hubstütze bekannt (US-A-4 162 798), bei der das Außenrohr der Stütze eine Gewindespindel aufnimmt. Sie wird mit einer Mutter in ihrer eingestellten Lage gegenüber dem Außenrohr gesichert. Die Mutter sitzt auf einem Halteteil, das unter der Kraft einer Zugfeder steht, die dafür sorgt, daß die Mutter in die Gewindespindel eingreift und dadurch die Lagesicherung ermöglicht. Soll die Hubstütze aus der vertikalen Stützlage in die Ruhelage verstellt werden, muß das Fahrzeug so weit bewegt werden, daß die Zugfeder die Stütze aufwärts schwenken kann. Darüber hinaus kann die Stütze aus der Ruhelage nur von Hand in die vertikale Stützlage zurückgeschwenkt werden.

Schließlich ist eine Hubstütze bekannt (US-A-4 635 904), deren Stütze teleskopartig ausgebildet ist, die aus einer vertikalen Stützlage in eine horizontale Ruhelage verschwenkt werden kann. Hierzu sind diametral einander gegenüberliegend zwei Zugfedern vorgesehen, die mit einem Ende mit dem Außenrohr der Stütze und mit ihrem anderen Ende am Träger befestigt sind. Bei dieser Hubstütze besteht die Gefahr, daß mit zunehmender Gebrauchsdauer die Federkraft nachläßt, so daß die Stütze nicht mehr zuverlässig in ihre verschiedenen Lagen geschwenkt werden kann.

Der Erfindung liegt die Aufgabe zugrunde, die gattungsgemäße höhenverstellbare Hubstütze so auszubilden, daß sie einfach in der Handhabung und preisgünstig in der Fertigung ist und dennoch eine sichere Abstützung gewährleistet.

Diese Aufgabe wird bei der gattungsgemäßen höhenverstellbaren Hubstütze erfindungsgemäß mit den kennzeichnenden Merkmalen des Anspruches 1 gelöst.

Bei der erfindungsgemäßen Hubstütze greift der Mitnehmer durch den Schlitz in das äußere Rohr der Stütze und greift unmittelbar am Außenrohr an. Innerhalb des äußeren Rohres wirkt das innen liegende Ende des Mitnehmers mit dem Ende des Innenrohres der Stütze zusammen. Zum Verschwenken der Stütze mittels des Mitnehmers sind keine zusätzlichen Bauteile erforderlich; vielmehr greift der Mitnehmer unmittelbar am äußeren Rohr an. Die erfindungsgemäße Hubstütze zeichnet sich durch eine konstruktiv einfache Ausbildung aus, die sich auch in einer kostengünstigen Fertigung auswirkt. Dennoch arbeitet die erfindungsgemäße Hubstütze zuverlässig. Der mit dem äußeren Rohr sowie dem inneren Rohr zusammenwirkende Mitnehmer stellt sicher, daß die Stütze zuverlässig in die Stütz- bzw. in die Ruhelage verschwenkt werden kann.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert.
Es zeigen:
- Fig. 1: in schematischer Darstellung eine erfindungsgemäße, in Ruhestellung befindliche Stütze, die an einem Wohnmobil gelagert ist,
- Fig. 2: in einer Ansicht in Richtung des Pfeiles II in Fig. 1 die Stütze in ihrer Stützstellung,
- Fig. 3: in vergrößerter Darstellung und in Seitenansicht die erfindungsgemäße Stütze in ihrer Ruhestellung,
- Fig. 4: teilweise in Ansicht und teilweise im Schnitt die Stütze gemäß Fig. 3 in ihrer Stützstellung,
- Fig. 5: teilweise einen Schnitt und teilweise eine Ansicht in Richtung des Pfeiles V in Fig. 4,
- Fig. 6 und Fig. 7: eine zweite Ausführungsform einer erfindungsgemäßen Stütze in Darstellungen entsprechend den Fig. 4 und 5.

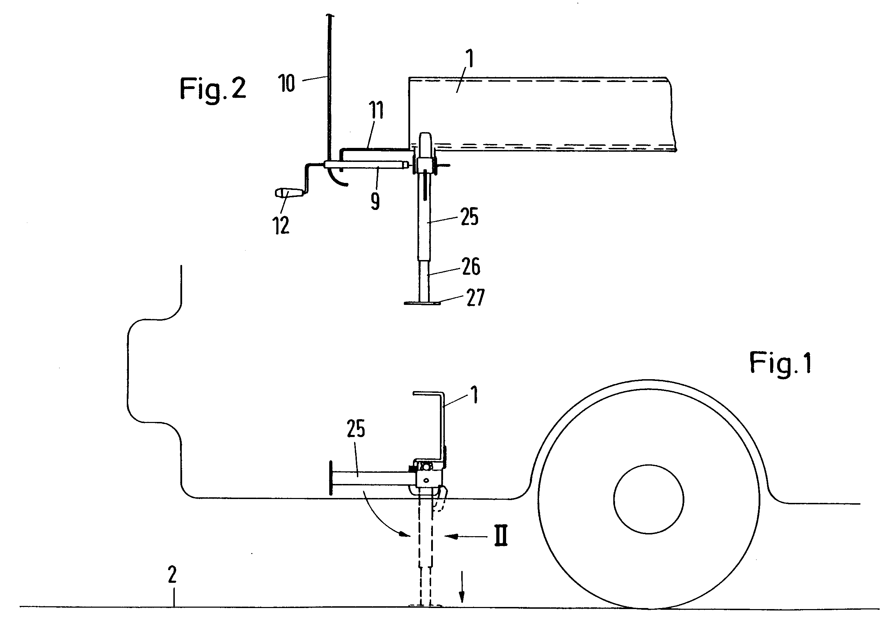

Die Stütze dient insbesondere zur Abstützung von Wohnmobilen. Die Stütze kann aber beispielsweise auch zur Abstützung von Wohnwagen verwendet werden. Sie ist an der Unterseite des jeweiligen Fahrzeuges schwenkbar gelagert. Wie die Figuren 1 und 2 zeigen, wird die Stütze an einem Träger 1 des jeweiligen Fahrzeuges montiert. In der Ruhestellung (ausgezogene Linien in Fig. 1) liegt die Stütze horizontal. Vorteilhaft ist sie so am Fahrzeug angeordnet, daß sie nicht nach unten übersteht. Dadurch ist die Stütze in der Ruhestellung nicht sichtbar. Soll das Fahrzeug abgestützt werden, dann wird die Stütze in ihre Stützstellung (Fig. 2) gebracht, in der sie vertikal steht und auf dem Boden 2 aufsteht.

Durch die Stütze wird das Fahrzeug, beispielsweise ein Wohnmobil, in der Waagerechten fixiert. Die Bewegungen der Personen im Wohnmobil führen dadurch nicht zu einem Schaukeln oder Schlingern des Wohnmobiles, da es über die Stütze sicher auf dem Untergrund 2 abgestützt ist.

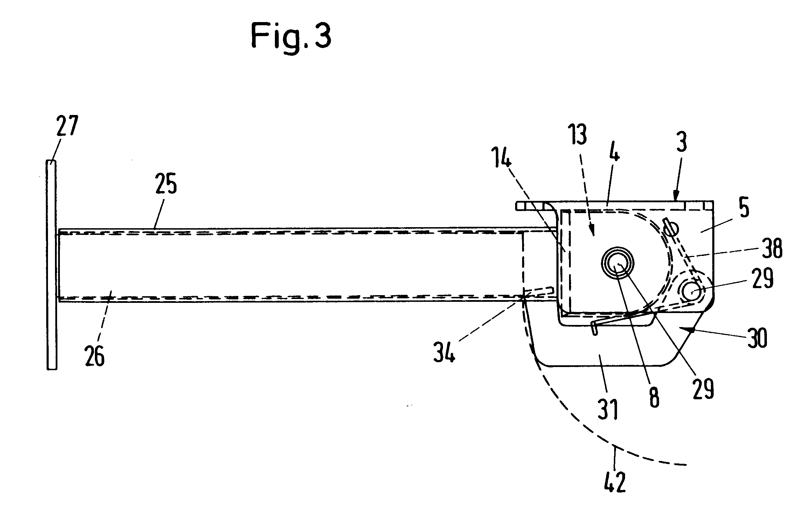

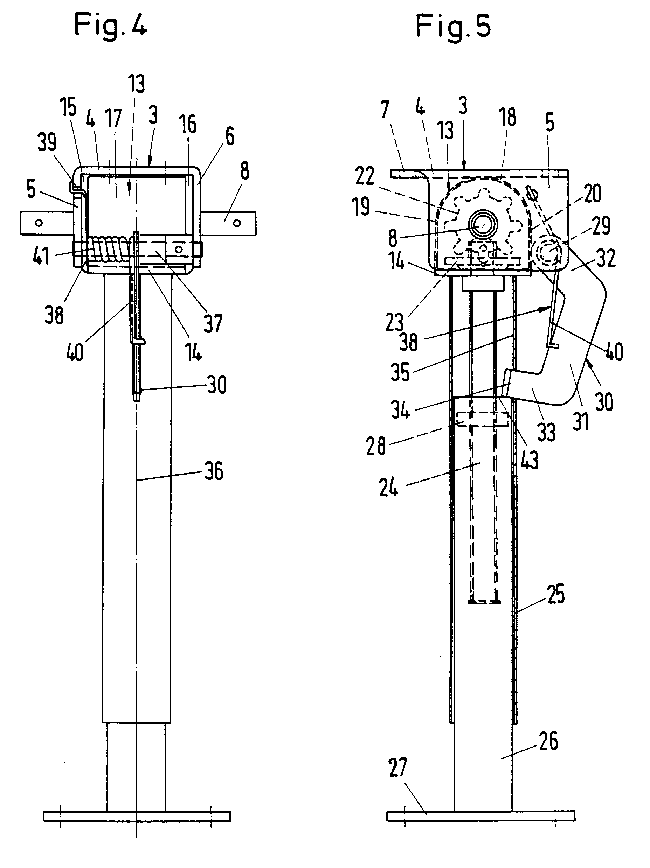

Die Stütze hat einen im wesentlichen U-förmigen Lagerbock 3, mit dem die Stütze am fahrzeugseitigen Träger 1 angeschraubt wird. Der Lagerbock 3 hat einen ebenen Steg 4, mit dem er flächig am Träger 1 anliegt. Dadurch wird der Lagerbock zuverlässig am Träger abgestützt. Die beiden Schenkel 5 und 6 des Lagerbockes 3 bilden seitliche Abdeckungen, welche das noch zu beschreibende Getriebe der Stütze seitlich abdecken. Der Steg 4 steht, wie die Fig. 3 und 5 zeigen, über die eine Stirnseite der Schenkel 5, 6 vor und hat in diesem Bereich Durchtrittsöffnungen 7 (Fig. 5) für Schrauben, Gewindebolzen und dgl., mit denen der Lagerbock lösbar am Träger 1 befestigt werden kann.

In den Schenkeln 5 und 6 des Lagerbockes 3 ist eine Welle 8 drehbar gelagert, die mit ihren Enden über die beiden Schenkel ragt (Fig. 4). Auf das eine überstehende Wellenende wird, wie Fig. 2 zeigt, eine Zwischenwelle 9 aufgeschoben und drehfest mit dem Wellenende verbunden. Die Zwischenwelle 9 überbrückt den Abstand zwischen der Lagerstelle der Stütze am Träger 1 und einer Außenwand 10 des Fahrzeuges. Das vom Lagerbock 3 abgewandte Ende der Zwischenwelle 9 ist vorteilhaft in einem Ausleger 11 drehbar gelagert, der an der Unterseite des Trägers 1 befestigt ist und bis nahe an die Außenwand 10 reicht. Zur Lagerung der Zwischenwelle 9 ist das der Außenwand 10 zugewandte Ende des Auslegers 11 nach unten abgewinkelt. In die Zwischenwelle 9 kann eine Kurbel 12 gesteckt werden, mit der die Welle 8 bequem von der Außenseite des Fahrzeuges aus gedreht werden kann. Je nach Lagerstelle des Lagerbockes 3 kann die Kurbel 12 auch unmittelbar mit einem der überstehenden Wellenenden verbunden werden.

Auf der Welle 8 sitzt innerhalb des Lagerbockes 3 ein Gehäuse 13, das einen ebenen Boden 14 und Seitenwände 15 und 16 aufweist. Der Boden 14 und die Seitenwände 15, 16 sind durch eine Wand 17 miteinander verbunden.

Die Seitenwände 15, 16 sind gleich ausgebildet und haben, wie die Fig. 3 und 5 zeigen, einen halbkreisförmig gekrümmt verlaufenden Rand 18, der in zueinander parallele und bis zum Boden 14 reichende Randabschnitte 19 und 20 übergeht (Fig. 5). Der Rand 18 ist um die Achse 21 der Welle 8 gekrümmt ausgebildet. Das Gehäuse 13 sitzt drehbar auf der Welle 8.

Innerhalb des Gehäuses 13 sitzt auf der Welle 8 drehfest ein Zahnrad 22 (Fig. 5), das mit einem Zahnrad 23 kämmt, das drehfest auf einer Gewindespindel 24 sitzt. Sie liegt senkrecht zur Achse 21 der Welle 8 und ragt durch den Gehäuseboden 14 in ein Rohr 25, das senkrecht an die Unterseite des Gehäusebodens anschließt. In das fest mit dem Gehäuse 13 verbundene Rohr 25 greift ein weiteres Rohr 26 ein, das an seinem freien Ende eine Stützplatte 27 trägt, mit der die Stütze in der Stützstellung (Fig. 2) auf dem Boden 2 aufliegt. Die beiden Rohre 25, 26 bilden ein Teleskoprohr, das in der Ruhestellung der Stütze seine kürzeste Länge hat. Im Innenrohr 26 ist eine Spindelmutter 28 befestigt, die auf der Gewindespindel 24 sitzt. Durch Drehen der Gewindespindel 24 wird somit das Innenrohr 26 gegenüber dem Außenrohr 25 verschoben.

Die Gewindespindel 24 ist gegenüber dem Gehäuseboden 14 festgelegt, so daß sie gegenüber dem Gehäuse 13 nicht in ihrer Längsrichtung verschoben werden kann.

Die Zahnräder 22, 23 liegen geschützt innerhalb des Gehäuses 13.

Die beiden Schenkel 5, 6 des Lagerbockes 3 sind i Bereich außerhalb des Gehäuses 13 durch eine Achse 29 miteinander verbunden, auf der schwenkbar ein Mitnehmerglied 30 sitzt. Es ist etwa U-förmig ausgebildet und dient dazu, beim Ein- bzw. Ausfahren der Stütze die beiden Rohre 25, 26 zusammen mit dem Gehäuse 13 um die Achse 21 der Welle 8 zu schwenken.

Das Mitnehmerglied 30 hat einen Steg 31, der in der Ruhestellung des Ständers (Fig. 3) senkrecht zum Boden 14 des Gehäuses 13 liegt. An einem Ende geht der Steg 31 stumpfwinklig in einen Schenkel 32 über, mit dem das Mitnehmerglied schwenkbar auf der Achse 29 gelagert ist. Am anderen Ende geht der Steg 31 ebenfalls stumpfwinklig in einen Schenkel 33 über, dessen freies Ende mit einer Abwinkelung 34 versehen ist, die einen in Längsrichtung des Außenrohres 25 verlaufenden Schlitz 35 (Fig. 5) hintergreift. Der Schenkel 33 ist kürzer als der Schenkel 32 und liegt unter einem kleineren Winkel zum Steg 31 als der gegenüberliegende Schenkel 32.

Der Längsschlitz 35 erstreckt sich von der Unterseite des Gehäusebodens 14 aus. Durch die Abwinkelung 34 ist das Mitnehmerglied 30 fest mit dem Außenrohr 25 verbunden.

Damit beim Verschwenken des Mitnehmergliedes 30 keine unzulässigen Querkräfte auftreten, ist das Mitnehmerglied 30 in einer Diametralebene 36 bzw. Längsmittelebene des Außenrohres 25 angeordnet (Fig. 4). In dieser Lage ist das Mitnehmerglied 30 auf der Achse 29 durch wenigstens eine Distanzbuchse 37 sowie eine Schenkelfeder 38 gesichert. Das eine Schenkelende 39 ist in eine Öffnung des Schenkels 5 des Lagerbockes 3 eingehängt, während das andere Schenkelende 40 am Steg 31 des Mitnehmergliedes 30 angreift. Dadurch ist das Mitnehmerglied 30 in Richtung auf die in Fig. 5 dargestellte verschwenkte Lage belastet. Die Schenkelfeder 38 sitzt mit ihren Windungen 41 auf der Achse 29.

In der ausgefahrenen Lage der Stütze (Fig. 4 und 5) liegt der Steg 31 des Mitnehmergliedes 30 unter einem spitzen Winkel zur Achse der Gewindespindel 24 bzw. der Rohre 25, 26. Der Steg 31 erstreckt sich vom längeren Schenkel 32 aus derart in Richtung auf die Stützplatte 27, daß er zusammen mit der Achse der Rohre 25, 26 einen spitzen Winkel einschließt. Dadurch liegt die Eingriffsstelle des Mitnehmergliedes 30 am Außenrohr 25 näher bei der Achse der Gewindespindel 24 bzw. der Rohre 25, 26 als die Achse 29, auf der das Mitnehmerglied 30 gelagert ist. Dies hat den Vorteil, daß sich die beiden Rohre 25, 26 durch das Mitnehmerglied 30 in noch zu beschreibender Weise mühelos aus der Stützstellung gemäß den Fig. 4 und 5 in die Ruhestellung gemäß Fig. 3 verschwenken lassen.

Die Achse 29 liegt näher zu dem vom Steg 4 des Lagerbockes 3 abgewandten Rand als die Welle 8, zu der die Achse parallel verläuft.

In der Ruhestellung gemäß Fig. 3 ist das Innenrohr 26 vollständig in das Außenrohr 25 eingefahren. Das Gehäuse 13 ist innerhalb des Lagerbockes 3 so verschwenkt, daß die beiden Rohre 25, 26 sich parallel zum Steg 4 des Lagerbockes 3 erstrecken. Der Steg 31 des Mitnehmergliedes 30, das vorteilhaft als Stanzteil ausgebildet ist, erstreckt sich vorteilhaft parallel zu den Rohren 25, 26. Die Abwinkelung 34 liegt am oberen Ende des Schlitzes 35 mit geringem Anstand vom Schenkel 5 des Lagerbockes 3 (Fig. 3). Die Schenkelfeder 38 belastet das Mitnehmerglied 30 entgegen dem Uhrzeigersinn.

Soll nun die Stütze in ihre Stützstellung verstellt werden, wird die Welle 8 mit der Kurbel 12 in der entsprechenden Richtung gedreht. Über das Getriebe 22, 23 wird die Gewindespindel 24 gedreht, wodurch über die Spindelmutter 28 das Innenrohr 26 aus dem Außenrohr 25 herausgefahren wird. Da das Mitnehmerglied 30 unter der Kraft der Schenkelfeder 38 liegt, wird es beim Verstellen des Innenrohres 26 gleichzeitig gegen den Uhrzeigersinn um die Achse 29 geschwenkt. Das freie Ende der Abwinkelung 34 des Mitnehmergliedes 30 bewegt sich dabei auf einem Kreis 42 um die Achse 29. Durch diese unter Federkraft erfolgende Schwenkbewegung des Mitnehmergliedes 30 werden die beiden Rohre 25, 26 zusammen mit dem Gehäuse 13 um die Achse 21 der Welle 8 geschwenkt. Da während der Schwenkbewegung der Rohre 25, 26 das Innenrohr 26 herausgeschoben wird, kann sich der Schenkel 33 des Mitnehmergliedes 30 innerhalb des Schlitzes 35 des Außenrohres 25 verschieben. Hierbei liegt die Abwinkelung 34 des Mitnehmergliedes 30 stets auf dem innerhalb des Außenrohres 25 befindlichen Ende 43 des Innenrohres 26 auf. Die Fig. 4 und 5 zeigen die Stützlage, in der die beiden Rohre 25, 26 zusammen mit dem Gehäuse 13 um 90° im Gegenuhrzeigersinn um die Achse 21 der Welle 8 verschwenkt worden sind.

Soll die Stütze wieder in ihre Ruhelage gemäß Fig. 3 verstellt werden, wird die Welle 8 in umgekehrtem Drehsinn betätigt. Dann wird das Innenrohr 26 über das Getriebe 22, 23, die Gewindespindel 24 und die Spindelmutter 28 in das Außenrohr 25 zurückgeschoben. Da das Mitnehmerglied 30 mit seinem Schenkel 33 bzw. der Abwinkelung 34 auf dem Innenrohr 26 aufliegt, kann das Innenrohr 26 nur dann in das Außenrohr 25 zurückgeschoben werden, wenn das Mitnehmerglied 30 gleichzeitig um die Achse 29 im Uhrzeigersinn verschwenkt wird. Da der Schenkel 33 des Mitnehmergliedes 30 in der Stützlage der Stütze (Fig. 4 und 5) schräg aufwärts gerichtet ist und mit der Achse der Rohre 25, 26 einen spitzen Winkel einschließt, läßt sich das Mitnehmerglied 30 beim Zurückfahren des Innenrohres 26 leicht um die Achse 29 im Uhrzeigersinn verschwenken. Dadurch werden die beiden Rohre 25, 26 zusammen mit dem Gehäuse 13 durch das Mitnehmerglied 30 ebenfalls im Uhrzeigersinn verschwenkt, bis die Ruhelage gemäß Fig. 3 erreicht ist.

Das Mitnehmerglied 30 wird beim Zurückschwenken in die Ruhelage durch die Rohre 25, 26 gegen die Kraft der Schenkelfeder 38 mitgenommen. Umgekehrt werden die Rohre 25, 26 durch das unter Federkraft stehende Mitnehmerglied 30 aus der Ruhelage gemäß Fig. 3 in die Stützlage gemäß den Fig. 4 und 5 verschwenkt.

Die Kurbel 12 läßt sich bequem von der Außenseite des Fahrzeuges aus betätigen, so daß die Bedienungsperson nicht unter das Fahrzeug kriechen muß. Dadurch ist eine rasche Verstellung der Stütze gewährleistet. Anstelle der abnehmbaren Kurbel 12 kann selbstverständlich auch ein Elektromotor vorgesehen sein, der an die Fahrzeugelektrik angeschlossen ist. Dann kann die Stütze motorisch angetrieben in gleicher Weise zwischen ihren verschiedenen Lagen verschwenkt werden.

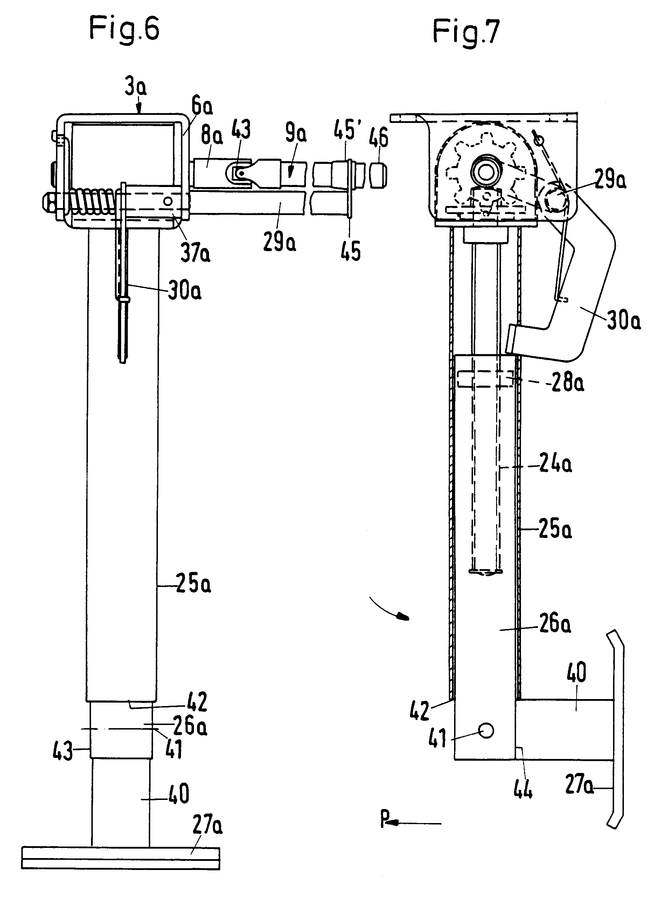

Bei der Stütze gemäß den Fig. 6 und 7 ist im Unterschied zur zuvor beschriebenen Ausführungsform das Innenrohr zweiteilig ausgebildet. Es besteht aus einem längeren, in das Außenrohr 25a ragenden Rohrteil 26a und einem zweiten kürzeren Rohrteil 40. Es ist am Rohrteil 26a schwenkbar befestigt. Dieses Rohrteil ist mehr als doppelt so lang wie das Rohrteil 40. Seine Schwenkachse 41 liegt bei ausgefahrenem Innenrohr 26a, 40 mit Abstand unterhalb des freien Endes 42 des Außenrohres 25a.

Die Rohrteile 26a und 40 haben vorzugsweise quadratischen Querschnitt, wobei der Querschnitt des Rohrteiles 40 kleiner ist als der des Rohrteiles 26a. Es hat an seiner einen Seite 44 einen (nicht dargestellten) Durchbruch, durch den das Rohrteil 40 in die in Fig. 7 dargestellte Lage hochgeschwenkt werden kann. Die Schwenkachse 41, die die Rohrteile 26a und 40 durchsetzt, liegt senkrecht zur Schwenkrichtung des Rohrteiles 40. Im dargestellten Ausführungsbeispiel kann das Rohrteil 40 um die Achse 41 im Gegenuhrzeigersinn um 90° nach oben geschwenkt werden.

Es ist auch möglich, den Schwenkwinkel größer als 90° zu wählen. Hierzu muß nur der Abstand des Rohrteiles 40 vom freien Ende 42 des Außenrohres 25a größer und der Durchbruch im Rohrteil 26 länger sein.

Die Stütze wird in Richtung des Pfeiles in Fig. 7 aus der Ruhestellung (Fig. 1) in die in Fig. 6 dargestellte Stützstellung geschwenkt, in der die am freien Ende des Rohrteiles 40 vorgesehene Stützplatte 27a auf dem Untergrund aufliegt. Sollte nun das Fahrzeug, beispielsweise in einem Gefahrenfall, in Richtung des Pfeiles P in Fig. 7 wegfahren müssen, ohne vorher die Stütze hochschwenken zu können, wird das Rohrteil 40 um die Achse 41 in die in Fig. 7 dargestellte Lage beim Wegfahren des Fahrzeuges hochgeschwenkt. Dadurch kommt die Stütze vom Untergrund frei, so daß sie nicht beschädigt wird.

Das Rohrteil 40 ist in Schwenkachsrichtung vorteilhaft so breit, daß es mit einer ausreichend hohen Reibung im Rohrteil 26a sitzt. Dadurch bleibt das Rohrteil 40 in seiner hochgeschwenkten Lage.

Wird das Innenrohr 26a, 40 in das Außenrohr 25a in der anhand des vorigen Ausführungsbeispieles beschriebenen Weise zurückgefahren, dann wird das Rohrteil 40 aus seiner nach oben geschwenkten Lage zwangsläufig in die gestreckte Stellung zurückgeschwenkt, in der es fluchtend zum Rohrteil 26a verläuft.

Wenn das Innenrohr 26a durch Betätigen der Kurbel 12 (Fig. 2) über die Spindel 24a und die Spindelmutter 28a (Fig. 7) in das Außenrohr 25a verschoben wird, wird gleichzeitig das Rohrteil 40 durch seine Anlage am Rohrende 42 nach unten um seine Achse 41 geschwenkt, bis das Rohrteil 40 fluchtend zum Rohrteil 26a liegt. In dieser Lage liegt das Rohrteil 40 an der der Seite 44 gegenüberliegenden Innenseite des Rohrteiles 26a an. Dann wird das Innenrohr 26a, 40 weiter in das Außenrohr eingefahren, bis das Rohrteil 40 im Außenrohr versenkt liegt. Im übrigen läuft der Verstellvorgang gleich ab wie bei der vorigen Ausführungsform.

Die Stütze gemäß den Fig. 6 und 7 unterscheidet sich von der Stütze nach den Fig. 1 bis 5 weiter dadurch, daß ihre Welle 8a, die durch die Kurbel 12 (Fig. 2) betätigt wird, mit der Zwischenwelle 9a über ein Kardangelenk 43 verbunden ist. Infolge der zwei einander senkrecht kreuzenden Schwenkachsen des Kardangelenkes 43 kann die Zwischenwelle 9a gegenüber der Welle 8a in jeder Richtung verschwenkt werden. Die Zwischen- bzw. Kardanwelle 9a ragt mit ihren von der Welle 8a abgewandten Enden durch eine Lagerbohrung 45' einer Lasche 45, in der die Welle 9a drehbar abgestützt ist. Auf das freie Wellenende 46 wird die Kurbel 12 gesteckt.

Die Achse 29a, auf der das Mitnehmerglied 30a sitzt, ist auf der Seite der Zwischenwelle 9a über den Träger 3a verlängert. Am freien Ende der Achse 29a ist die Lasche 45 befestigt, die senkrecht zur Achse 29a liegt. Sie erstreckt sich parallel zur Welle 9a. Die Lasche 45 befindet sich nahe der Außenwand 10 (Fig. 2) des Fahrzeuges, so daß die Zwischenwelle 9a einwandfrei abgestützt ist.

Infolge der kardangelenkartigen Verbindung der Zwischenwelle 9a mit der Welle 8a besteht die Möglichkeit, die Zwischenwelle 9a gegenüber der Welle 8a zu verschwenken. Hierbei wird über die Lasche 45 die Achse 29a um ihre Längsmittellinie gedreht. Diese Verstellung der Zwischenwelle 9a ist dann erforderlich, wenn wegen Wagenteilen und dergleichen die Kurbel 12 zum Verschwenken der Stütze bei fluchtender Lage der Zwischenwelle 9a zur Welle 8a nicht angesetzt werden kann. Dann kann die Zwischenwelle 9a gegenüber der Welle 8a so verschwenkt werden, daß die Kurbel 12 mit der Zwischenwelle 9a gekuppelt werden kann.

Abgesehen von den beschriebenen Unterschieden ist die Hubstütze nach den Fig. 6 und 7 gleich ausgebildet wie das vorige Ausführungsbeispiel.

## Patentansprüche

1. Höhenverstellbare Hubstütze, vorzugsweise für Wohnmobile, mit mindestens einem zur Befestigung an einem Halter (1) vorgesehenen Träger (3, 3a) und wenigstens einer Stütze (25, 26; 25a, 26a, 40), die teleskopförmig ausgebildet ist, ein äußeres sowie ein inneres Rohr aufweist, am Träger (3, 3a) schwenkbar gelagert und aus einer Ruhelage in eine Stützlage schwenkbar ist, und mit wenigstens einem Mitnehmer (30, 30a), der an der Stütze (25, 26; 25a, 26a, 40) angreift, am Träger (3, 3a) schwenkbar gelagert ist und die Stütze (25, 26; 25a, 26a, 40) beim Schwenkvorgang in zumindest eine der beiden Lagen mitnimmt,
dadurch gekennzeichnet, daß der Mitnehmer (30, 30a) durch einen in Achsrichtung der Stütze (25, 26; 25a, 26a, 40) verlaufenden Schlitz (35) des äußeren Rohres (25, 25a) ragt und am Rohr angreift sowie mit seinem innerhalb des äußeren Rohres (25, 25a) liegenden Ende (34) mit dem Ende (43) des inneren Rohres (26, 26a) zusammenwirkt.

2. Hubstütze nach Anspruch 1,
dadurch gekennzeichnet, daß die Stütze (25, 26; 25a, 26a, 40) mit einem Antrieb (8, 22 bis 24, 28; 8a, 24a, 28a) verschwenkbar ist, der vorzugsweise eine Welle (8, 8a) aufweist, die über ein Zahnradgetriebe (22, 23) mit der Stütze (25, 26; 25a, 26a, 40) verbunden ist.

3. Hubstütze nach Anspruch 2,
dadurch gekennzeichnet, daß an die vorzugsweise durch einen Stellmotor, wie einen Elektromotor, drehbare Welle (8; 8a) eine Kurbel (12) anschließbar ist.

4. Hubstütze nach einem der Ansprüche 1 bis 3,
dadurch gekennzeichnet, daß der Träger (3, 3a) im wesentlichen U-förmig ausgebildet ist.

5. Hubstütze nach einem der Ansprüche 2 bis 4,
dadurch gekennzeichnet, daß im Träger (3, 3a) ein Schwenkteil (13) gelagert ist, das mit der Stütze (25, 26; 25a, 26a, 40) verbunden ist und das vorzugsweise ein Gehäuse ist, in dem das Zahnradgetriebe (22, 23) untergebracht ist.

6. Hubstütze nach Anspruch 5,
dadurch gekennzeichnet, daß das Schwenkteil (13) von der Welle (8; 8a) des Antriebes (8, 22 bis 24, 28; 8a, 24a, 28a) durchsetzt ist.

7. Hubstütze nach einem der Ansprüche 2 bis 6,
dadurch gekennzeichnet, daß das eine Zahnrad (23) des Zahnradgetriebes (22, 23) drehfest auf einer Gewindespindel (24; 24a) sitzt, die in der Stütze (25, 26; 25a, 26a, 40) untergebracht ist, und daß vorzugsweise auf der Gewindespindel (24; 24a) eine Spindelmutter (28; 28a) sitzt, die drehfest an einem der Rohre (26; 26a) der Stütze (25, 26; 25a, 26a, 40) befestigt ist.

8. Hubstütze nach einem der Ansprüche 1 bis 7,
dadurch gekennzeichnet, daß der Mitnehmer (30; 30a) formschlüssig mit dem äußeren Rohr (25; 25a) der Stütze (25, 26; 25a, 26a, 40) verbunden ist.

9. Hubstütze nach Anspruch 7 oder 8,
dadurch gekennzeichnet, daß die Spindelmutter (28; 28a) drehfest mit dem inneren Rohr (26; 26a) der Stütze (25, 26; 25a, 26a, 40) verbunden ist.

10. Hubstütze nach einem der Ansprüche 1 bis 9,
dadurch gekennzeichnet, daß der Mitnehmer (30; 30a) den Rand des Schlitzes (35) des äußeren Rohres (25, 25a) hintergreift.

11. Hubstütze nach einem der Ansprüche 1 bis 10,
dadurch gekennzeichnet, daß der Mitnehmer (30; 30a) in Richtung auf die Stützlage der Stütze (25, 26; 25a, 26a, 40) federbelastet ist.

12. Hubstütze nach einem der Ansprüche 1 bis 11,
dadurch gekennzeichnet, daß das innere Rohr (26a, 40) aus mindestens zwei Rohrteilen (26a und 40) besteht, von denen das eine Rohrteil (40) um eine senkrecht zur Achse des anderen Rohrteiles (26a) liegende Achse (41) schwenkbar ist.

13. Hubstütze nach Anspruch 12,
dadurch gekennzeichnet, daß das vorzugsweise bis in eine Anschlagstellung am äußeren Rohr (25a) gegenüber dem anderen Rohrteil (26a) schwenkbare Rohrteil (40) an dem vom Mitnehmer (30a) abgewandten Ende des anderen Rohrteiles (26a) angeordnet ist.

14. Hubstütze nach Anspruch 12 oder 13,
dadurch gekennzeichnet, daß das andere Rohrteil (26a) an mindestens einer Seite eine Durchtrittsöffnung (44) für das schwenkbare Rohrteil (40) aufweist, das vorzugsweise reibschlüssig mit dem anderen Rohrteil (26a) verbunden ist.

15. Hubstütze nach einem der Ansprüche 1 bis 14,
dadurch gekennzeichnet, daß die Welle (8a) für die Kurbel (12) über ein Kardangelenk (43) mit einer Zwischenwelle (9a) verbunden ist, die vorzugsweise durch eine Lagerbohrung (44) einer Lasche (45) ragt, die am freien Ende einer über den Träger (3a) ragenden Achse (29a) befestigt ist.

## Claims

1. A height-adjustable lifting steady, preferably for caravans, with at least one support (3, 3a) provided for securing to a retaining element (1) and at least one steady (25, 26; 25a, 26a, 40), which has a telescopic construction, comprises an outer and an inner tube, is pivotably mounted on the support (3, 3a) and can be pivoted from an inoperative position into a steadying position, and with at least one driver (30, 30a), which acts upon the steady (25, 26; 25a, 26a, 40), is pivotably mounted on the support (3, 3a) and drives the steady (25, 26; 25a, 26a, 40) during the pivoting procedure into at least one of the two positions, characterised in that the driver (30, 30a) projects through a slot (35) in the outer tube (25, 25a) extending in the axial direction of the steady (25, 26; 25a, 26a, 40) and acts upon the tube and with its end (34) lying inside the outer tube (25, 25a) cooperates with the end (43) of the inner tube (26, 26a).

2. A lifting steady according to claim 1, characterised in that the steady (25, 26; 25a, 26a, 40) is pivotable by means of a drive (8, 22 to 24, 28; 8a, 24a, 28a), which preferably comprises a shaft (8, 8a), which is connected via a toothed-wheel gearing (22, 23) to the steady (25, 26; 25a, 26a, 40).

3. A lifting steady according to claim 2, characterised in that a crank (12) can be connected to the shaft (8; 8a), which shaft is rotatable preferably by means of an adjusting motor, such as an electric motor.

4. A lifting steady according to one of claims 1 to 3, characterised in that the support (3, 3a) is substantially U-shaped.

5. A lifting steady according to one of claims 2 to 4, characterised in that a pivot element (13) is mounted in the support (3, 3a), is connected to the steady (25, 26; 25a, 26a, 40) and is preferably a housing, in which the toothed wheel gearing (22, 23) is accommodated.

6. A lifting steady according to claim 5, characterised in that the pivot element (13) is penetrated by the shaft (8; 8a) of the drive (8, 22 to 24, 28; 8a, 24a, 28a).

7. A lifting steady according to one of claims 2 to 6, characterised in that one toothed wheel (23) of the toothed wheel gearing (22, 23) is mounted against rotation on a threaded spindle (24; 24a), which is accommodated in the steady (25, 26; 25a, 26a, 40), and a spindle nut (28; 28a) is preferably mounted on the threaded spindle (24; 24a) and is rotatably rigidly secured to one of the tubes (26; 26a) of the steady (25, 26, 25a, 26a, 40).

8. A lifting steady according to one of claims 1 to 7, characterised in that the driver (30; 30a) is connected in positive locking fashion with the outer tube (25; 25a) of the steady (25, 26; 25a, 26a, 40).

9. A lifting steady according to claim 7 or 8, characterised in that the spindle nut (28; 28a) is rotatably rigidly connected to the inner tube (26; 26a) of the steady (25, 26; 25a, 26a, 40).

10. A lifting steady according to one of claims 1 to 9, characterised in that the driver (30; 30a) engages behind the edge of the slot (35) in the outer tube (25, 25a).

11. A lifting steady according to one of claims 1 to 10, characterised in that the driver (30; 30a) is spring-loaded in the direction of the steadying position of the steady (25, 26; 25a, 26a, 40).

12. A lifting steady according to one of claims 1 to 11, characterised in that the inner tube (26a, 40) comprises at least two tube parts (26a and 40), of which one tube part (40) is pivotable about an axis (41) lying perpendicular to the axis of the other tube part (26a).

13. A lifting steady according to claim 12, characterised in that the tube part (40), which is preferably pivotable relative to the second tube part (26a) into an abutment position against the outer tube (25a), is arranged at the end of the second tube part (26a) remote from the driver (30a).

14. A lifting steady according to claim 12 or 13, characterised in that the second tube part (26a) comprises a through opening (44) on at least one side for the pivotable tube part (40), which is preferably connected with frictional resistance to the second tube part (26a).

15. A lifting steady according to one of claims 1 to 14, characterised in that the shaft (8a) for the crank (12) is connected via a Cardan joint (43) to an intermediate shaft (9a), which preferably projects through a bearing bore (44) of a bracket (45), which is secured to the free end of an axle (29a) projecting beyond the support (3a).

## Revendications

1. Béquille de levage réglable en hauteur, de préférence pour autocaravanes, comportant au moins un appui (3, 3a) prévu pour être fixé sur un support (1) et au moins une béquille (25, 26 ; 25a, 26a, 40) réalisée télescopique, présentant un tube extérieur ainsi qu'un tube intérieur, ladite béquille étant montée pivotante sur l'appui (3, 3a) et susceptible d'être pivotée depuis une position de repos dans une position de soutien, et comportant au moins un élément d'entraînement (30, 30a) qui s'engage sur la béquille (25, 26 ; 25a, 26a, 40), qui est monté pivotant sur l'appui (3, 3a) et entraîne la béquille (25, 26 ; 25a, 26a, 40) lors du mouvement de pivotement dans au moins une des deux positions, caractérisée en ce que l'élément d'entraînement (30, 30a) fait saillie à travers une fente (35) du tube extérieur (25, 25a), laquelle s'étend dans la direction de l'axe de la béquille (25, 26 ; 25a, 26a, 40), en ce qu'il engage le tube, et en ce qu'avec son extrémité (34) située à l'intérieur du tube extérieur (25, 25a), il coopère avec l'extrémité (43) du tube intérieur (26, 26a).

2. Béquille de levage selon la revendication 1, caractérisée en ce que la béquille (25, 26 ; 25a, 26a, 40) est susceptible d'être pivotée avec un entraînement (8, 22 à 24 ; 8a, 24a, 28a) qui présente de préférence un arbre (8, 8a) qui est relié à la béquille (25, 26 ; 25a, 26a, 40) par l'intermédiaire d'une transmission à engrenage (22, 23).

3. Béquille de levage selon la revendication 2, caractérisée en ce qu'une manivelle (12) peut être raccordée sur un arbre (8, 8a) rotatif de préférence grâce à un moteur de commande tel qu'un moteur électrique.

4. Béquille de levage selon l'une quelconque des revendications 1 à 3, caractérisée en ce que l'appui (3, 3a) est réalisé sensiblement en forme de U.

5. Béquille de levage selon l'une quelconque des revendications 2 à 4, caractérisée en ce que dans le support (3, 3a) est montée une pièce de pivotement (13) qui est reliée à la béquille (25, 26 ; 25a, 26a, 40) et qui est de préférence un boîtier dans lequel est logée la transmission à engrenage (22, 23).

6. Béquille de levage selon la revendication 5, caractérisée en ce que la pièce de pivotement (13) est traversée par l'arbre (8 ; 8a) de l'entraînement (8, 22 à 24 ; 8a, 24a, 28a).

7. Béquille de levage selon l'une quelconque des revendications 2 à 6, caractérisée en ce que l'un des engrenages (23) de la transmission à engrenage (22, 23) est en placé fixe en rotation sur une broche filetée (24, 24a) qui est logée dans la béquille (25, 26 ; 25a, 26a, 40) et en ce que de préférence sur la broche filetée est placé un écrou vissé (28 ; 28a) qui est fixé de manière solidaire en rotation sur l'un des tubes (26 ; 26a) de la béquille (25, 26 ; 25a, 26a, 40).

8. Béquille de levage selon l'une quelconque des revendications 1 à 7, caractérisée en ce que l'élément d'entraînement (30 ; 30a) est relié par coopération de formes avec le tube extérieur (25 ; 25a) de la béquille (25, 26 ; 25a, 26a, 40).

9. Béquille de levage selon l'une ou l'autre des revendications 7 et 8, caractérisée en ce que l'écrou vissé (28, 28a) est relié de manière solidaire en rotation avec le tube intérieur (26 ; 26a) de la béquille (25, 26 ; 25a, 26a, 40).

10. Béquille de levage selon l'une quelconque des revendications 1 à 9, caractérisée en ce que l'élément d'entraînement (30 ; 30a) engage par l'arrière le bord de la fente (35) du tube extérieur (25, 25a).

11. Béquille de levage selon l'une quelconque des revendications 1 à 10, caractérisée en ce que l'élément d'entraînement (30 ; 30a) est sollicité par ressort en direction de la position de soutien de la béquille (25, 26 ; 25a, 26a, 40).

12. Béquille de levage selon l'une quelconque des revendications 1 à 11, caractérisée en ce que le tube intérieur (26a, 40) est constitué par au moins deux parties de tube (26a et 40) dont l'une des parties de tube (40) est susceptible de pivoter autour d'un axe (41) perpendiculaire à l'axe de l'autre partie de tube (26a).

13. Béquille de levage selon la revendication 12, caractérisée en ce que la partie de tube (40) de préférence pivotante jusque dans une position de butée sur le tube extérieur (25a), par rapport à l'autre partie de tube (26a), est agencée sur l'extrémité détournée de l'élément d'entraînement (30a), de l'autre partie de tube (26a).

14. Béquille de levage selon l'une ou l'autre des revendications 12 et 13, caractérisée en ce que l'autre partie de tube (26a) présente au moins sur un côté une ouverture traversante (44) pour la partie de tube (40) pivotante qui est de préférence reliée en coopération par friction avec l'autre partie de tube (26a).

15. Béquille de levage selon l'une quelconque des revendications 1 à 14, caractérisée en ce que l'arbre (8a) est relié par l'intermédiaire d'un joint universel (43) à un arbre intermédiaire (9a) qui fait de préférence saillie à travers un perçage de montage (44) d'une patte (45) qui est fixée à l'extrémité libre d'un axe (29a) faisant saillie au-delà de l'appui (3a).
